# EUROPÄISCHE PATENTSCHRIFT

(11) **EP 0 440 317 B1**
(45) Veröffentlichungstag und Bekanntmachung des Hinweises auf die Patenterteilung: **02.03.1994**
(21) Anmeldenummer: 91250011.3
(22) Anmeldetag: 22.01.1991
(51) Int. Cl.: G01N 29/04

(54) **Verfahren und Prüfeinrichtungen zum Prüfen ferromagnetischer Werkstücke mittels Ultraschallwellen**
Method and apparatus for testing ferromagnetic work pieces by ultrasonic waves
Procédé et appareils pour examiner des pièces à usiner ferromagnétiques par ondes ultrasonores

(30) Priorität: 31.01.1990 DE 4003215; 21.01.1991 DE 4101942
(43) Veröffentlichungstag der Anmeldung: 07.08.1991
(73) Patentinhaber: MANNESMANN Aktiengesellschaft, 40027 Düsseldorf (DE)
(72) Erfinder: Graff, Alfred, Dipl.-Phys., W-4300 Essen 16 (DE); Wächter, Michael, Dr.rer.nat., W-4030 Ratingen 8 (DE)
(74) Vertreter: Presting, Hans-Joachim, Dipl.-Ing.

(56) Entgegenhaltungen:
- DE-C- 3 017 389
- US-A- 3 583 213
- US-A- 4 295 214
- US-A- 4 380 931
- US-A- 4 395 913
- Soviet Inventions Illustrated, parts I-III Complete, Woche X 15, 19, Mai 1976 DERWENT PUBLICATIONS LTD., London, M 21

## Beschreibung

Die Erfindung betrifft ein Verfahren und Prüfeinrichtungen mit Magnetsystem zum Prüfen ferromagnetischer Werkstücke mittels Ultraschallwellen, wobei über ein an die Oberfläche eines ferromagnetischen Werkstückes angelegtes, mit Wechselstrom erregtes Magnetsystem ein alternierendes, parallel zur Oberfläche im Prüfkörper ausgerichtetes Magnetisierungsfeld erzeugt wird und im Bereich maximales Magnetisierungsfeldstärke durch eine in der Nähe der Oberfläche des Werkstückes angeordnete Wandlerspule Hochfrequenz-Sendeimpulse ausgelöst werden.

Der elektrodynamischen Erzeugbarkeit von Ultraschallwellen in elektrisch leitfähigen Materialien liegen drei Anregungsmechanismen zugrunde. Diese sind Magnetostriktion, Lorenzkräfte und magnetische Kräfte. In diesem Fall sind jedoch nur zwei Anregungsmechanismen wesentlich, nämlich die Ausnutzung der Lorenzkräfte und der Magnetostriktion.

Ein derartiges Verfahren ist aus der deutschen Patentschrift 30 17 389 bekannt. Hierbei wird in bekannter Weise ein mit einer Magnetspule versehenes Magnetjoch über Polschuhe an die Oberfläche des Prüfkörpers angelegt. Die mit Wechselstrom beaufschlagte Magnetspule erzeugt ein alternierendes Magnetisierungsfeld im Werkstück. Durch die Beaufschlagung der Wandlerdrähte mit Hochfrequenz-Sendeimpulsen werden in der Oberfläche des Werkstückes Wirbelströme induziert. Kraftwirkungen auf das Metallgitter, die durch Überlagerung des Magnetisierungsfeldes mit dem Wirbelstrom entstehen, führen zur Ultraschallanregung, wobei der Erzeugungsort der Ultraschallwellen somit die Werkstückoberfläche selbst ist. Die Detektion der an Reflexionsstellen im zu prüfenden Werkstück reflektierten Ultraschallwellen geschieht reziprok.

Durch die Verwendung eines alternierenden Magnetisierungsfeldes in dieser bekannten Anordnung werden die Magnetfeldlinien gemäß dem Skineffekt zur Oberfläche hin gedrängt. Daraus ergibt sich eine Erhöhung der Oberflächenfeldstärke am Erzeugungsort des Ultraschalls. Nachteilig bei diesem bekannten Verfahren ist, daß keine selektive Richtungseinschallung vorgenommen werden kann.

Aus der deutschen Patentschrift 35 11 768 ist im weiteren eine Ultraschallprüfeinrichtung mit einer Mehrzahl von Wandlerspulen und Magneten bekannt, mit der es möglich ist, in bestimmten Richtungen in das zu prüfende Material einzuschallen. Diese Technik bezeichnet man als phased-array-Technik und beruht auf dem Prinzip der Superposition einzelner Wellen zu einer resultierenden Welle.

Das heißt, erst die Superposition der einzelnen von den verschiedenen Wandlerspulen erzeugten Wellen erzeugt als resultierende Welle dann die Ultraschallwelle der geeigneten Art. Dabei geht man so vor, daß jeweils das Senden und Empfangen von Ultraschallwellen über mehrere Sender und Empfänger mit gezielt phasenverschobener Erregung der Wandler erreicht wird, wobei die Phasenverzögerung der Erregung von einer Wandlerspule zur anderen genau bemessen sein muß, so daß die geeigneten Superpositionsbedingungen, d.h. gezielte konstruktive und destruktive Interferenz, entstehen.
Hierbei ist bekannterweise jeder Wandler einzeln anzusteuern und über eine zentrale Elektronik vorzuwählen. Nachteilig hierbei ist, daß aufgrund der einzelnen Ansteuerung eines jeden Wandlers die Elektronik sehr aufwendig ist und daß zur Erzeugung einer einzigen Wellenfront im Prinzip alle Einzelelemente des Wandlers in Betrieb sind. Des weiteren ist nachteilig, daß auch hierbei im dynamischen Prüfbetrieb an den Störstellen je nach Bewegungsrichtung der Prüfeinrichtung über das zu prüfende Werkstück unterschiedlich hohe Ultraschallamplituden entstehen können.

Der Erfindung liegt daher die Aufgabe zugrunde, ein Verfahren und eine konstruktiv einfache Prüfeinrichtung zu schaffen, mit dem bzw. mit der ferromagnetische Werkstücke zum einen unter verschiedenen vorbestimmbaren Winkel auf Fehlstellen geprüft und zum anderen alternativ dazu zusätzlich noch die Dicke des Werkstückes bestimmt werden kann.

Die gestellte Aufgabe wird bei einem Verfahren der gattungsgemäßen Art dadurch gelöst, daß ein vertikal zur Oberfläche des Werkstückes ausgerichtetes Magnetfeld quasi-statischer Polarität erzeugt und dem alternierenden Magnetisierungsfeld überlagert wird und daß abhängig von einer angestrebten Einschallrichtung entweder nur im Bereich oberer oder nur im Bereich unterer Halbwellen des Wechselstromes Hochfrequenz-Sendeimpulse ausgelöst werden. Die sich daraus ergebenden Vorteile sind zum einen, daß eine hohe Ultraschallintensität erreicht wird und zum anderen je nachdem, ob im Bereich der oberen oder der unteren Halbwellen des Wechselstromes Hochfrequenz-Sendeimpulse ausgelöst werden, die Einschallrichtung festgelegt werden kann. Durch die erfindungsgemäß vorgeschlagene Einbringung eines Magnetisierungsfeldes, welches horizontal zur Prüfoberfläche liegt, und eines diesem überlagerten senkrecht zur Oberfläche ausgerichteten Magnetfeldes quasi-statischer Polarität bewirkt, daß mit ein und demselben Wandler vertikal polarisierte Transversalwellen angeregt werden, die dann richtungsselektiv in den Prüfkörper eingeschallt werden können. Aus dem Patent Abstract of Japan Vol. 7 No. 73 vom 25.03.83 und aus dem Patent Abstract of Japan Vol. 12 No. 334 vom 08.09.88 ist es bekannt, daß durch die Überlagerung zweier senkrecht zueinander gerichteter Magnetfelder Ultraschallwellen unterschiedlicher Wellenmoden erzeugt werden. Diese Erzeugung unterschiedlicher Wellenmoden ist jedoch bei der vorliegenden Erfindung gerade vermieden; bei der vorliegenden Erfindung werden gezielt vertikal polarisierte Transversalwellen erzeugt.
Das heißt, daß in diesem Falle eine richtungsselektive Einschallung erst durch das erfindungsgemäß vorgeschlagene Verfahren ermöglicht ist. Im weiteren ist es vorteilhaft, daß dadurch unabhängig von der Bewegungsrichtung der Prüfeinrichtung bezüglich der Werkstückoberfläche, d. h. z. B. in Vorwärts- und Rückwärtsrichtung an einer gegebenen Störstelle im zu prüfenden Werkstück die gleiche Echoamplitude entsteht. Dabei führt die als erfindungsgemäß vorgeschlagene Maßnahme, daß abhängig von einer angestrebten Einschallrichtung entweder nur im Bereich oberer oder nur im Bereich unterer Halbwellen des Wechselstromes HF Sendeimpulse ausgelöst werden, erst in Verbindung mit der erfindungsgemäß genannten Überlagerung zweier Magnetfelder dazu, daß vertikal polarisierte Transversalwellen gezielt in ihrer Einschallrichtung vorgewählt werden können.

Diese o.g. vorteilhaften Konsequenzen beziehen sich dabei natürlich in analoger Weise auf die Erzeugung von Oberflächenwellen.

In weiterer Ausgestaltung des erfindungsgemäßen Verfahrens wird das vertikal zur Oberfläche des Werkstückes ausgerichtete Magnetfeld mit quasi-statischer Polarität und das alternierende Magnetisierungsfeld in seiner Feldstärke variabel gehalten. Dies ermöglicht eine optimale Anpassung an unterschiedliche zu prüfende Werkstücke. Es erweist sich als vorteilhaft, das erfindungsgemäße Verfahren dahingehend auszugestalten, daß der Wechselstrom in seinem Verlauf jeweils zwischen Nulldurchgang und nachfolgendem Amplitudenmaximum in mindestens zwei stetig ineinander übergehende Teilbereiche unterschiedlicher, aber jeweils konstanter Steigung unterteilt ist und daß entweder im Bereich der betragsmäßig kleinsten Steigung oder im Übergangsbereich zur betragsmäßig kleinsten Steigung hin Hochfrequenz-Sendeimpulse ausgelöst werden.

Der sich daraus ergebende Vorteil besteht darin, daß in diesen benannten Teilbereichen des Wechselstromes ein die Ultraschallsignale beeinträchtigendes Rauschen minimal ist. Ein solches Rauschen entsteht durch Ummagnetisierungsprozesse, die vom alternierenden Magnetisierungsfeld bewirkt werden und als Barkhausen-Rauschen bezeichnet werden. Das Barkhausen-Rauschen setzt schon bei geringen magnetischen Induktionen ein, d. h. im Bereich der Nulldurchgänge des Wechselstromes bzw. der Magnetisierungsfeldstärke. Mit wachsender Induktion nimmt das Barkhausen-Rauschen stark ab und ist beim Erreichen maximaler Feldstärken bzw. maximaler Induktionen, in denen dann auch die hochfrequenten Sendeimpulse gesendet werden, minimal. In vorteilhafter Ausgestaltung der Erfindung werden durch die Anpassung der Frequenz des Hochfrequenz-Sendeimpulses an die Wandlergeometrie im zu untersuchenden Werkstück vorwiegend Transversalwellen unter vorbestimmten Winkeln erzeugt. In weiterer vorteilhafter Ausgestaltung des erfindungsgemäßen Verfahrens werden durch die Anpassung der Frequenz der Hochfrequenz-Sendeimpulse an die Wandlergeometrie im zu untersuchenden Werkstück vorwiegend Oberflächenwellen erzeugt bzw. ermöglicht. Die Erzeugung von Oberflächenwellen hat dabei den Vorteil, daß z. B. Werkstücke mit umlaufend geschlossener Oberfläche, z.B. Rohre auf Oberflächenfehler untersucht werden können.

Auf diese verfahrenstechnischen Maßnahmen ist eine erste Prüfeinrichtung, bestehend aus einem mit einer Spule versehenem Magnetjoch, das mittels Wechselstrom ein alternierendes, parallel zur Oberfläche im Werkstück ausgerichtetes Magnetisierungsfeld erzeugt und einer zwischen den Polschuhen des Magnetjoches angeordneten Wandlerspule nach der weiteren Erfindung abgestimmt, indem zwischen den Polschuhen ein ein vertikales Magnetfeld erzeugender Magnet angeordnet ist. In vorteilhafter Ausgestaltung dieser erfindungsgemäßen Prüfeinrichtung ist der das vertikale Magnetfeld erzeugende Magnet wahlweise ein Permamentmagnet oder ein Elektromagnet.

Eine weitere Prüfeinrichtung zur Durchführung der verfahrenstechnischen Maßnahmen, bestehend aus einer Mehrzahl von Wandlerspulen und einer Mehrzahl von miteinander verbindbaren mit Spulen versehenen Magnetjochen ist erfindungsgemäß derart gestaltet, daß jedes Magnetjoch für sich mittels wechselstrom ein alternierendes, parallel zur Oberfläche im Werkstück ausgerichtetes Magnetisierungsfeld erzeugt, daß die einzelnen Magnetjoche sternförmig um ein gemeinsames zentrales Jochstück angeordnet und gerade Begrenzungslinien bildend mit demselben verbunden sind, daß mindestens zwei der einzelnen Magnetjoche unmittelbar benachbart und in einer Ebene liegend um jeweils einen Winkel von 45 Grad zueinander versetzt angeordnet sind, daß jeweils zwischen Polschuh des Magnetjoches und dem Polschuh des zentralen Jochstückes ein das vertikale Magnetfeld erzeugender Magnet und eine Hochfrequenz-Sendeimpulse auslösende Wandlerspule angeordnet ist und daß unter dem Polschuh des zentralen Jochstückes eine zusätzliche Wandlerspule angeordnet ist.

In weiterer vorteilhafter Ausgestaltung der Erfindung ist die Wandlerspule eben und mäanderförmig ausgebildet, und die zusätzliche Wandlerspule besteht aus einer ebenen Empfangsspule und einer ebenen Sendespule, die spiralförmig ausgebildet und konzentrisch angeordnet sind. Hierbei ergibt sich der Vorteil, daß innerhalb einer einzigen Prüfeinrichtung dieser Art die Möglichkeit der Schräg-, Längs- und Querfehlerprüfung und zusätzlich die Messung der Wanddicke des Werkstückes gegeben ist.

Auch hierbei sind die vertikale Magnetfelder erzeugenden Magnete wahlweise als Permament- oder Elektromagnete ausgestaltet.

In weiterer Ausgestaltung dieser erfindungsgemäßen Prüfeinrichtung sind die einzelnen Magnetjoche über Gelenke magnetisch leitend mit dem gemeinsamen zentralen Jochstück verbunden. Hieraus ergibt sich der Vorteil, daß sich die Prüfeinrichtung unabhängig von der Topographie des Werkstückes optimal anlegt.

Eine besonders vorteilhafte Ausgestaltung einer mehrzähligen Anordnung von Magnetjochen ist, daß das Magnetsystem aus vier Magnetjochen mit dem jeweiligen Magneten und der jeweiligen Wandlerspule besteht.

Insgesamt zeigt sich, daß die nach dem erfindungsgemäßen Verfahren arbeitenden Prüfeinrichtungen einfach gestaltet sind und auch ohne aufwendige Elektronik zu steuern sind.

Ausführungsbeispiele der Erfindung sowie die durch die erfindungsgemäß vorgeschlagenen Maßnahmen erzeugten physikalischen Anregungsprinzipien sind in der Zeichnung dargestellt und nachfolgend näher beschrieben.

Es zeigen:
- Figur 1: Darstellung: Wechselstrom-, Wechselspannungsverläufe, Barkhausen-Rauschen
- Figur 2: Darstellung: Wechselstromverlauf, Signalauslösung, Barkhausen-Rauschen
- Figur 3: Anregungsmechanismus (schematisch)
- Figur 4: Prüfeinrichtung mit einfachem Magnetsystem
- Figur 5: Prüfeinrichtung mit mehrzähligem Magnetsystem
- Figur 6: Schnittdarstellung des in Figur 5 dargestellten Magnetsystems
- Figur 7a: Mäanderspule
- Figur 7b: Wanddickenspule

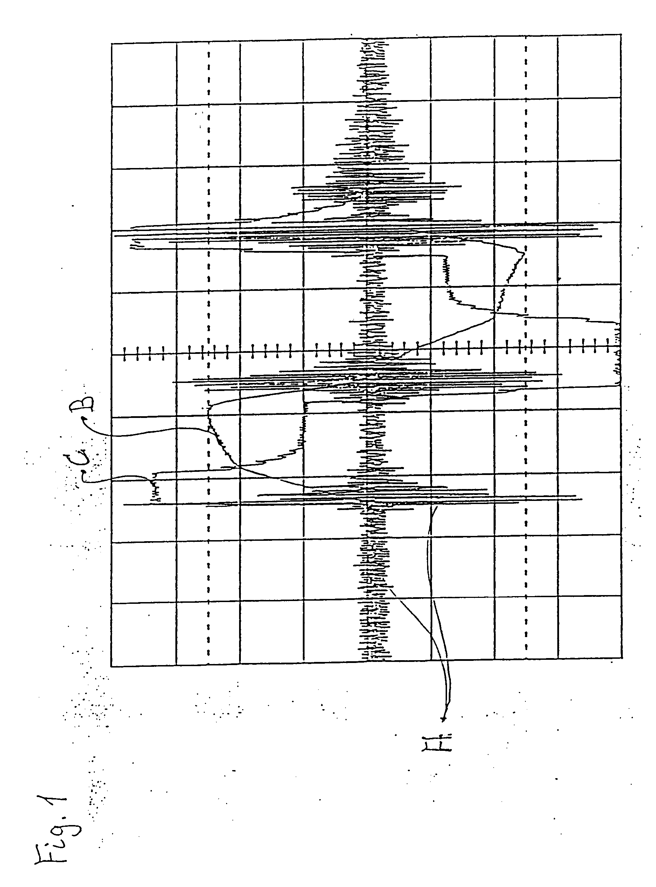

Figur 1 zeigt einen der möglichen verfahrensmäßigen Wechselstromverläufe B in Zusammenhang mit dem dazugehörigen Wechselspannungsverlauf C und dem dadurch bewirkten Barkhausen-Rauschen A. Die obere Halbwelle des Wechselstromverlaufes B zeigt zwischen dem ersten Nulldurchgang und dem nachfolgenden Amplitudenmaximum zwei deutlich voneinander unterscheidbare Bereiche unterschiedlicher aber jeweils konstanter Steigung. Dabei ist zu erkennen, daß diese Teilbereiche stetig ineinander übergehen. In den Bereichen hoher Ummagnetisierungsarbeit, d. h. in den Nulldurchgängen des Wechselstromes, nimmt das Barkhausen-Rauschen A maximale Intensitäten an. Das Barkhausen-Rauschen A ist dagegen minimal, wenn im Wechselstromverlauf der Bereich der betragsmässig kleinsten Steigung erreicht wird. Eine Signalauslösung in diesem Bereich erweist sich deshalb als vorteilhaft.

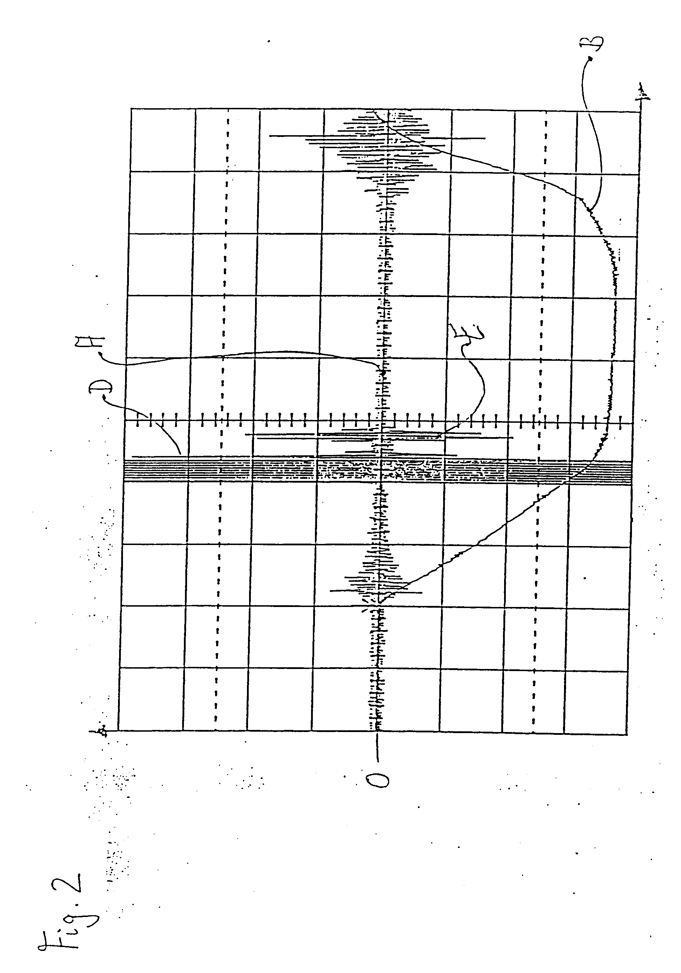

Figur 2 zeigt die Darstellung einer der möglichen verfahrensmäßigen Signalauslösezeiten des Hochfrequenz-Sendeimpulses D in Zusammenhang mit einem der möglichen verfahrensmäßigen Wechselstromverläufe und dem erzeugten Barkhausen-Rauschen A. Der Bereich der kleinsten Steigung des Wechselstromverlaufes B ist hierbei betragsmäßig nahezu vom Wert Null. Das sich daraus ergebende Barkhausen-Rauschen A ist über diesen benannten Bereich hin minimal. Der Hochfrequenz-Sendeimpuls D ist in dieser Darstellung im Übergangsbereich des Wechselstromverlaufes zur kleinsten Steigung hin ausgelöst worden. Ferner ist in dieser gewählten Darstellung der durch eine Störstelle bewirkte Echoimpuls E zu erkennen, der bezüglich des Hochfrequenz-Sendeimpulses D, um einen von der Laufzeit der Ultraschallwellen abhängigen Betrag verschoben, detektiert wird.

Allgemein ergibt sich aus dem dargestellten Verfahren, daß im Bereich der oberen Halbwellen des Wechselstromverlaufes die Richtung des Magnetisierungsfeldes entsprechend der Geometrie der Prüfeinrichtung vorgegeben wird. Während der unteren Halbwellen des Wechselstromverlaufes ist dann die Richtung des Magnetisierungsfeldes der während der oberen Halbwellen vorgegebenen Richtung antiparallel. Die Auswahl der Phasen ermöglicht somit eine selektive Richtungseinschallung, je nachdem, ob nur in den Phasen der oberen Halbwellen oder in den Phasen der unteren Halbwellen Hochfrequenz-Sendeimpulse ausgelöst werden.

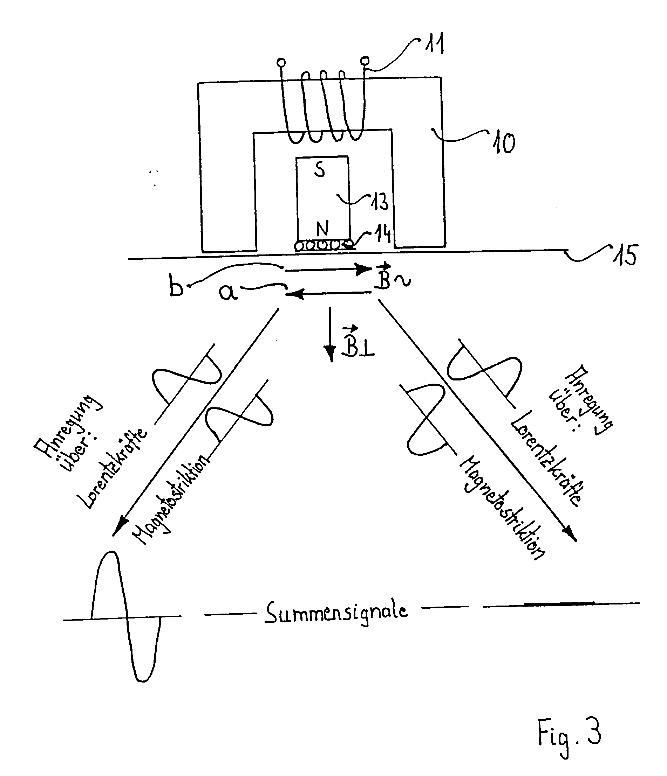

Figur 3 zeigt in schematischer Darstellung die bei dem erfindungsgemäß vorgeschlagenen Verfahren erzeugten Wellen im zu prüfenden Werkstück. Durch die dargestellte Geometrie, d.h. das durch das Magnetjoch 10 und die Spule 11 erzeugte alternierende Horizontalfeld B∿ in der Werkstückoberfläche 15 und das diesem überlagerten statischen Magnetfeld B⊥ , hervorgerufen durch den Magnet 13, werden nach Auslösen des HF-Sendeimpulses mittels des Wandlers 14 je nach momentaner Ausrichtung des Horizontalfeldes B∿ durch konstruktive und destruktive Interferenz entweder Ultraschallwellen in Vorwärts- oder in Rückwärtsrichtung erzeugt. Die Bedingung dafür, ob in Vorwärtsrichtung (linke Bildhälfte) oder in Rückwärtsrichtung (rechte Bildhälfte) Ultraschallwellen erzeugt werden, liegt dabei physikalisch wie folgt begründet.

Bei elektrodynamischer Anregung entstehen Ultraschallwellen durch drei verschiedene Anregungsmechanismen, wobei in diesem Falle zwei davon wesentlich sind, und zwar Magnetostriktion und Lorenzkräfte. Beim Auslösen des HF-Sendeimpulses werden Ultraschallwellen zunächst in Vorwärts- und Rückwärtsrichtung im Werkstück erzeugt, unabhängig davon, wie das Horizontalfeld gerade orientiert ist. Hierbei stellt sich nun die Frage, wie es möglich ist, daß trotzdem in Abhängigkeit von der Horizontalfeldmagnetisierung die Einschallrichtung gezielt vorgewählt werden kann. Dies läßt sich wie folgt erklären: Legt man für den Moment des Ultraschallerzeugens eine gegebene Horizontalfeldorientierung zugrunde und definiert eine Vorwärts- und eine Rückwärtsrichtung, so gilt folgendes. Die in Vorwärtsrichtung laufenden durch Magnetostriktion erzeugten Wellen haben gegenüber den in Rückwärtsrichtung über Magnetostriktion erzeugten Wellen eine Phasenverschiebung von 180°. Dahingegen besteht zwischen den Wellen, die über Lorenzkräfte erzeugt werden, in Vorwärtsrichtung gegenüber der Rückwärtsrichtung keine Phasenverschiebung. Da in beiden Richtungen jeweils sowohl Wellen über Lorenzkräfte als auch Wellen über Magnetostriktion erzeugt werden, kommt es in beiden Einschallrichtungen auch zu unterschiedlichen Überlagerungen der einzelnen Wellen. Das heißt in einer Richtung ist die Überlagerung konstruktiv und in der anderen destruktiv. Dies liegt daran, daß wie erfindungsgemäß vorgeschlagen, dem horizontalen Wechselfeld ein statisches vertikales Feld überlagert wird. Dieses statische vertikale Feld ist auch durch ein zum horizontalen Wechselfeld synchronisiertes vertikales Wechselfeld ersetzbar. Wichtig ist dabei nur, daß das vertikale Feld im Moment der Erzeugung bzw. Detektion von Ultraschall quasi statisch ist.

Da die richtungselektive Erzeugung von Ultraschall bei der vorliegenden erfindung nicht trivial ist, dient zur Veranschaulichung folgendes Beispiel:

Befindet sich das Horizontalfeld B∿ während des Auslösens des HF-Sendeimpulses in der Orientierung nach Pfeil a, so werden Transversalwellen über Lorenzkräfte erzeugt, die in Vorwärtsrichtung (linke Bildhälfte) phasengleich mit den über Magnetostriktion erzeugten Transversalwellen sind. Durch diese Gleichphasigkeit kommt es zu einer konstruktiven Überlagerung der Wellen und es entsteht eine starke Transversalwelle, die als Summensignal in Vorwärtsrichtung ins Werkstück läuft. Gleichzeitig werden in diesem Augenblick aber auch in Rückwärtsrichtung (rechte Bildhälfte) Transversalwellen über Magnetostriktion erzeugt, die jedoch gegenüber der über Magnetostriktion erzeugten Wellen der Vorwärtsrichtung um 180° phasenverschoben sind. Da die über Lorenzkräfte erzeugten Wellen keine Phasenverschiebung gegenüber der in Vorwärtsrichtung erzeugten aufweisen, liegt hier zwischen den beiden Wellenarten (Lorentz-, Magnetostriktiv-) in Rückwärtsrichtung eine Phasenverschiebung von 180° vor, so daß eine destruktive Überlagerung entsteht, wobei sich somit die Wellen in Rückwärtsrichtung gegeneinander aufheben. Das heißt, das Summensignal ist in Rückwärtsrichtung Null.

Ist nun die Horizontalfeldmagnetisierung während des Augenblickes des Aussendens des HF-Sendeimpulses in entgegengesetzter Richtung, d.h. in Richtung von Pfeil b orientiert, so ist der Vorgang entsprechend reziprok und es entsteht eine Einschallung in Rückwärtsrichtung, wobei die Vorwärtsrichtung in entsprechender Weise zu null interferiert.

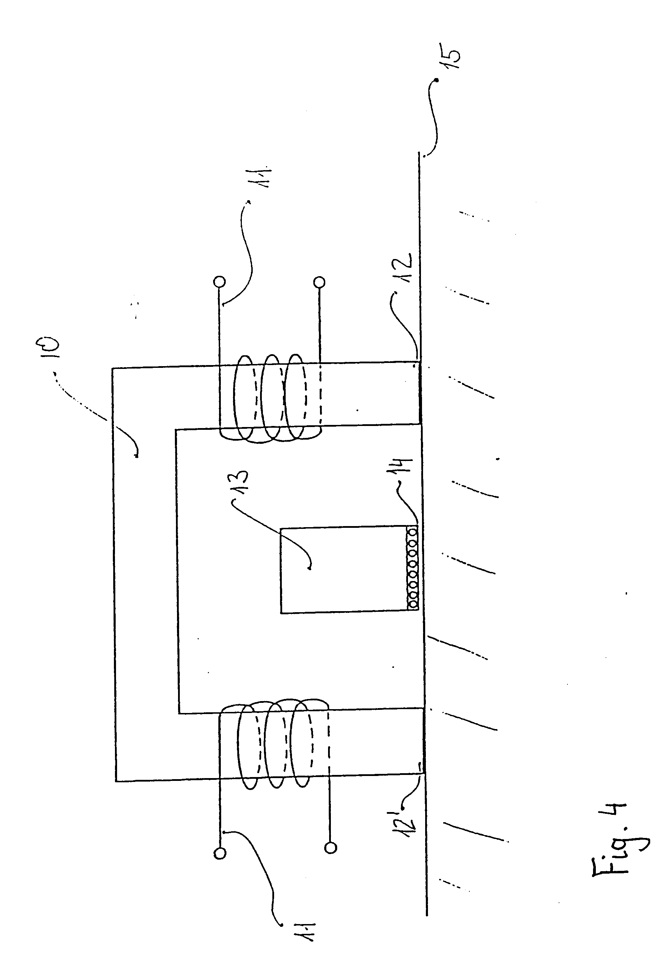

Figur 4 zeigt eine der erfindungsgemäßen Prüfeinrichtungen mit einem einfachen Magnetsystem. Das mit Spulen 11 versehene Magnetjoch 10 liegt über seine Polschuhe an der Werkstückoberfläche 15 an. Zwischen den beiden Polschuhen 12, 12' ist die erfindungsgemäße Anordnung eines zusätzlichen Magneten 13 mit der darunter angeordneten Wandlerspule 14 dargestellt. Der zusätzliche Magnet 13 erzeugt dabei das vertikal zur Oberfläche des Werkstückes ausgerichtete Magnetfeld statischer Polarität, welches dem über die Polschuhe 12, 12' in die Werkstückoberfläche 15 eingekoppelten alternierenden Magnetisierungsfeld überlagert wird.

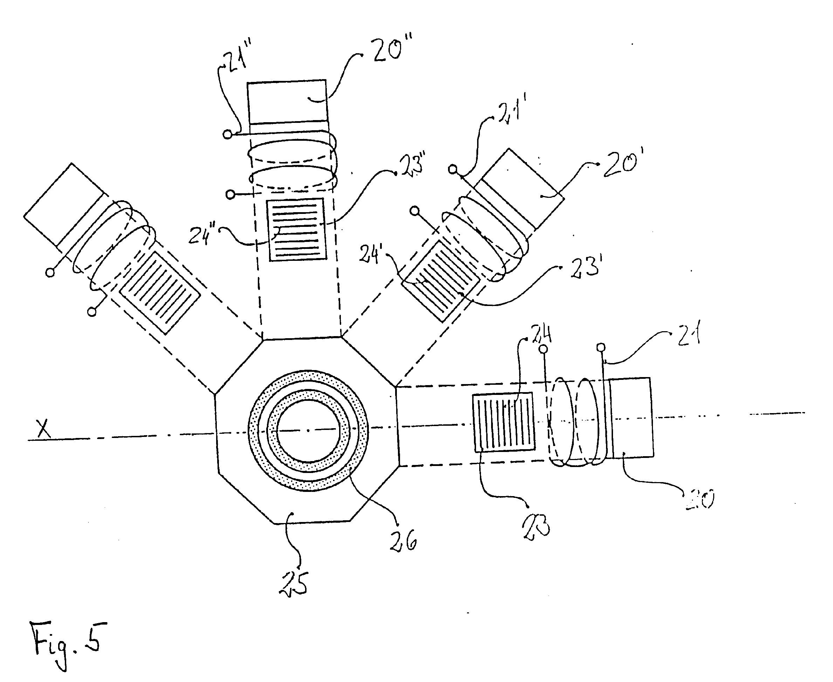

Figur 5 zeigt eine weitere erfindungsgemäße Prüfeinrichtung mit mehrzähligem Magnetsystem. Die dort dargestellte Draufsicht zeigt, daß vier einzelne Magnetsysteme mit einem Winkel von jeweils 45 Grad zueinander um das zentrale Jochstück 25 angeordnet sind. Jedes einzelne Magnetsystem besteht dabei aus einem Magnetjoch 20, einer Spule 21, einem zusätzlichen Magneten 23 und einer prüfseitig befindlichen Wandlerspule 24. Die einzelnen Magnetsysteme erzeugen jedes für sich ein alternierendes Magnetisierungsfeld mit dem dazu überlagerten statischen Magnetfeld und ermöglichen durch ihre räumliche Anordnung die Kombination von Quer-, Schräg- und Längsfehlerprüfung. Die Wandlerspule 26 ermöglicht noch eine elektrodynamische Wanddickenprüfung in bekannter Anordnung. Dabei ist die Wandlerspule 26 als Rundspule ausgebildet.

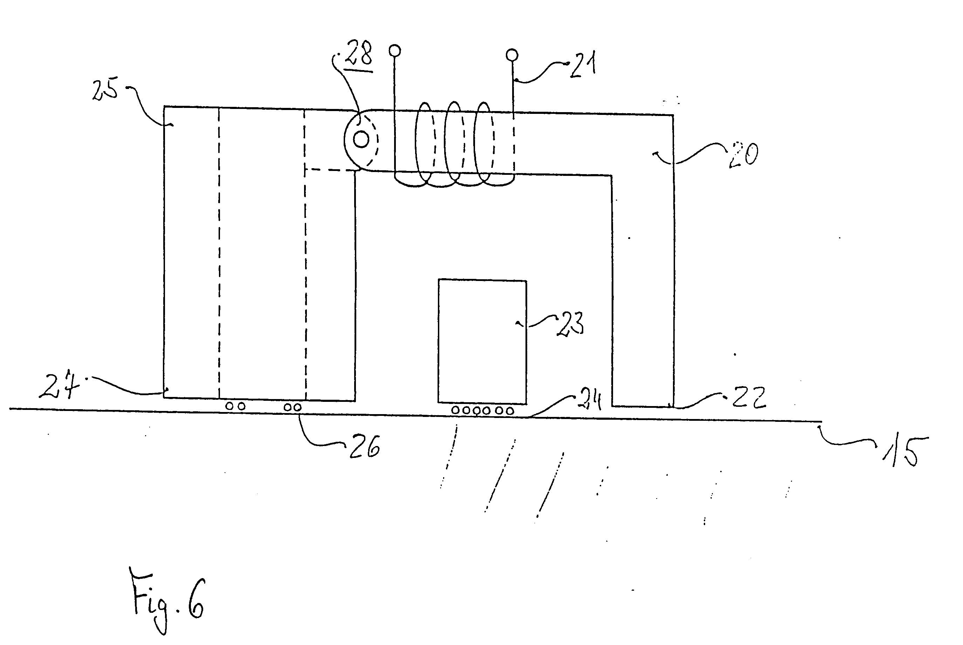

Figur 6 zeigt die in Figur 4 dargestellte Prüfeinrichtung in einem Schnitt entlang der Achse X. Hierbei ist nun auch die genaue Lage der zusätzlichen Wandlerspule 26 unterhalb des zentralen Jochstückes 25 zu erkennen. Das jeweilige alternierende Magnetisierungsfeld wird in jedem einzelnen Magnetsystem über den einen Polschuh 22 eines jeden Magnetjoches 20 (in Figur 4 Position 20,20',20''...) und über den Polschuh 27 des gemeinsamen zentralen Jochstückes 25 in die Werkstückoberfläche 15 eingebracht. Die magnetisch leitende Verbindung zwischen den einzelnen Magnetjochen 20, 20', 20''... und dem zentralen Jochstück 25 wird über jeweils ein Gelenk 28 verwirklicht. Ein jedes Magnetsystem ist dabei mit Spulen zur Erzeugung des Magnetisierungsfeldes versehen.

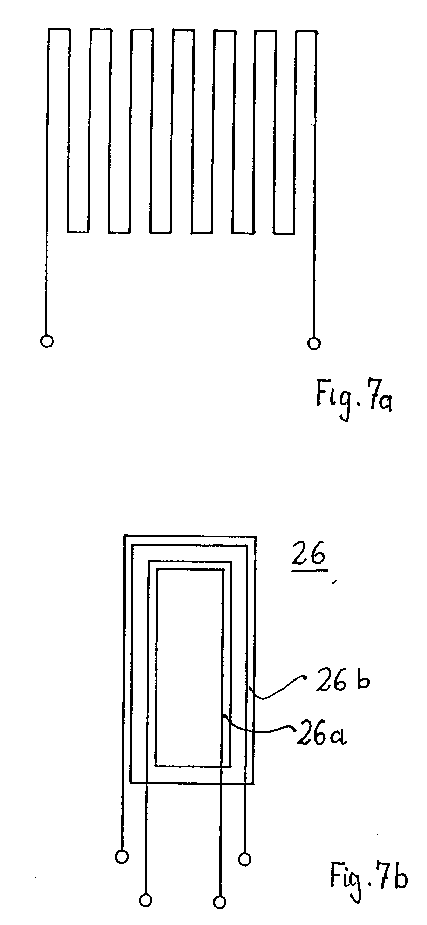

Figur 7a zeigt eine Wandlerspule, wie sie beispielsweise bei einer Ausführung nach Figur 4 bzw. 5 Verwendung findet. Die Wandlerdrähte liegen dabei mäanderförmig zueinander. Figur 7b zeigt eine Spulenanordnung, die für die Messung der Wanddicke geeignet ist. Hierbei handelt es sich um zwei konzentrisch spiralförmig laufende Spulen, die einem rechteckförmigen Grundformat folgen. Dabei ist die äußere Spule vorzugsweise die Sendespule (26b) und die innere Spule die Empfangsspule (26a).

Es wäre auch denkbar, eine Prüfeinrichtung zur ausschließlichen Messung der Wanddicke so auszugestalten, wie es Figur 4 zeigt, wobei die Wandlerspule 14 dann wie die in Figur 7 b dargestellte Wanddickenspule 26 ausgebildet ist. Hierbei ist dann nach dem erfindungsgemäß vorgeschlagenen Verfahren vorzugehen, wobei eine sehr hohe Ultraschallamplitude bei der Senkrechteinschallung zur Wanddickenprüfung entsteht. Die Messung der Wanddicke durch Senkrechteinschallung ist zwar an sich bekannt, jedoch nur entweder mit horizontaler oder nur mit vertikaler Magnetisierung. Erst die erfindungsgemäß vorgeschlagene Kombination von Horizontalfeld- und Vertikalfeld-Magnetisierung gestattet gerade bei der Wanddickenmessung eine extrem hohe Ultraschallamplitude. Diese Ultraschallamplitude ist sogar größer als die Summe der Ultraschallamplituden bei horizontaler Wechselfeld- und bei Vertikalfeldmagnetisierung. Das heißt, bei der Senkrechteinschallung sind die beiden Einzelkomponenten (Schallkomponenten aus vertikaler und horizontaler Magnetisierung) wesentlich kleiner als das Gesamtsignal. Bei optimaler Einstellung kann das Gesamtsignal durchaus eine Größenordnung größer sein als das Signal bei ausschließlich statischer Vertikalfeldmagnetisierung vergleichbarer Oberflächenfeldstärke.

Insgesamt ergeben sich für die Prüfeinrichtungen, die nach dem erfindungsgemäßen Verfahren arbeiten, die Vorteile, daß sie leicht über die zu prüfende Werkstückoberfläche bewegt werden können und daß insbesondere bei der Ausführung der Prüfeinrichtung mit mehrzähligem Magnetsystem eine optimale Anlage an die Werkstückoberfläche gewährleistet ist, wodurch die Ultraschallenergien optimal eingebracht werden können.

## Patentansprüche

1. Verfahren zum Prüfen ferromagnetischer Werkstücke mittels Ultraschallwellen, wobei über ein an die Oberfläche des Werkstückes angelegtes, mit Wechselstrom erregtes Magnetsystem ein alternierendes, parallel zur Oberfläche im Werkstück ausgerichtetes Magnetisierungsfeld erzeugt wird und im Bereich maximaler Magnetisierungsfeldstärke durch eine in der Nähe der Oberfläche des Werkstückes angeordnete Wandlerspule Hochfrequenz-Sendeimpulse ausgelöst werden,
**dadurch gekennzeichnet,**
daß ein vertikal zur Oberfläche des Werkstückes ausgerichtetes Magnetfeld quasi-statischer Polarität erzeugt und dem alternierenden Magnetisierungsfeld überlagert wird und daß abhängig von einer angestrebten Einschallrichtung entweder nur im Bereich oberer oder nur im Bereich unterer Halbwellen des Wechselstromes Hochfrequenz-Sendeimpulse ausgelöst werden.

2. Verfahren zum Prüfen ferromagnetischer Werkstücke mittels Ultraschallwellen nach Anspruch 1,
**dadurch gekennzeichnet,**
daß das vertikal zur Oberfläche des Werkstückes ausgerichtete Magnetfeld mit quasi-statischer Polarität und das alternierende Magnetisierungsfeld in ihren Feldstärken variabel gehalten werden.

3. Verfahren zum Prüfen ferromagnetischer Werkstücke mittels Ultraschallwellen nach den Ansprüchen 1 und 2,
**dadurch gekennzeichnet,**
daß der Wechselstrom in seinem Verlauf jeweils zwischen Nulldurchgang und nachfolgendem Amplitudenmaximum in mindestens zwei stetig ineinander übergehende Teilbereiche unterschiedlicher, aber jeweils konstanter Steigung unterteilt ist und daß entweder im Bereich der betragsmäßig kleinsten Steigung oder im Übergangsbereich zur betragsmäßig kleinsten Steigung hin die Hochfrequenz-Sendeimpulse ausgelöst werden.

4. Verfahren zum Prüfen ferromagnetischer Werkstücke mittels Ultraschallwellen nach den Ansprüchen 1 bis 3,
**dadurch gekennzeichnet,**
daß durch die Anpassung der Frequenz des Hochfrequenz-Sendeimpulses an die Wandlergeometrie, im zu untersuchenden Werkstück vorwiegend Transversalwellen unter vorbestimmten Winkeln erzeugt werden.

5. Verfahren zum Prüfen ferromagnetischer Werkstücke mittels Ultraschallwellen nach den Ansprüchen 1 bis 3,
**dadurch gekennzeichnet,**
daß durch die Anpassung der Frequenz des Hochfrequenz-Sendeimpulses an die Wandlergeometrie, im zu untersuchenden Werkstück vorwiegend Oberflächenwellen erzeugt werden.

6. Prüfeinrichtung mit Magnetsystem zur Durchführung des Verfahrens zum Prüfen ferromagnetischer Werkstücke mittels Ultraschallwellen nach Anspruch 1, bestehend aus einem mit einer Spule versehenem Magnetjoch, das mittels Wechselstrom ein alternierendes, parallel zur Oberfläche im Werkstück ausgerichtetes Magnetisierungsfeld erzeugt und einer zwischen den Polschuhen des Magnetjoches angeordneten Wandlerspule,
**dadurch gekennzeichnet,**
daß zwischen den Polschuhen (12,12') ein ein vertikales Magnetfeld erzeugender Magnet (13) angeordnet ist.

7. Prüfeinrichtung mit Magnetsystem zur Durchführung des Verfahrens zum Prüfen ferromagnetischer Werkstücke mittels Ultraschallwellen nach Anspruch 1, bestehend aus einer Mehrzahl von Wandlerspulen und einer Mehrzahl von miteinander verbindbaren mit Spulen versehenen Magnetjochen,
**dadurch gekennzeichnet,** daß jedes Magnetjoch für sich mittels Wechselstrom ein alternierendes, parallel zue Oberfläche im Werkstück ausgerichtetes Magnetisierungsfeld erzeugt, daß die einzelnen Magnetjoche (20,20',20''...) sternförmig um ein gemeinsames zentrales Jochstück (25) angeordnet und gerade Begrenzungslinien bildend mit demselben verbunden sind, daß mindestens zwei der einzelnen Magnetjoche (20,20'...) unmittelbar benachbart und in einer Ebene liegend um jeweils einen Winkel von 45 Grad zueinander versetzt angeordnet sind, daß jeweils zwischen Polschuh (22...) des Magnetjoches (20,20'...) und Polschuh (27) des zentralen Jochstückes (25) ein ein vertikales Magnetfeld erzeugender Magnet (23,23'...) und eine Hochfrequenz-Sendeimpulse auslösende Wandlerspule (24,24'...) angeordnet ist und daß unter dem Polschuh (27) des zentralen Jochstückes (25) eine zusätzliche Wandlerspule (26) angeordnet ist.

8. Prüfeinrichtung mit Magnetsystem nach einem oder mehreren der vorhergehenden Ansprüche,
**dadurch gekennzeichnet,**
daß die Wandlerspule (14,24,24'...) eben und mäanderförmig ausgebildet ist.

9. Prüfeinrichtung mit Magnetsystem nach einem oder mehreren der vorhergehenden Ansprüche,
**dadurch gekennzeichnet,**
daß die zusätzliche Wandlerspule aus einer ebenen Empfangsspule (26a) und einer ebenen Sendespule (26b) besteht, die spiralförmig ausgebildet und konzentrisch angeordnet sind.

10. Prüfeinrichtung mit Magnetsystem nach den Ansprüchen 6 oder 7,
**dadurch gekennzeichnet,**
daß der bzw. die Magnete (13,23,23'...) Permanentmagnete sind.

11. Prüfeinrichtung mit Magnetsystem nach den Ansprüchen 6 oder 7,
**dadurch gekennzeichnet,**
daß der bzw. die Magnete (13,23,23'...) Elektromagnete sind.

12. Prüfeinrichtung mit Magnetsystem nach den Ansprüchen 7 - 9 und einem der Ansprüche 10 bis 11,
**dadurch gekennzeichnet,**
daß die einzelnen Magnetjoche (20,20'...) jeweils über Gelenke (28...)magnetisch leitend mit dem gemeinsamen zentralen Jochstück (25) verbunden sind.

13. Prüfeinrichtung mit Magnetsystem nach Anspruch 12,
**dadurch gekennzeichnet,**
daß das Magnetsystem aus vier Magnetjochen (20,20'...) mit dem jeweiligen Magneten (23,23'...) und der jeweiligen Wandlerspule (24,24'...) besteht.

## Claims

1. Process and testing device for testing ferromagnetic workpieces using ultra-sonic waves such that, by means of a magnetic system energized by an alternating current which is placed on the surface of a ferromagnetic workpiece, an alternating magnetic field is produced which is directed parallel to the surface in the body being tested and high-frequency transmitted pulses are released in the area of maximum magnetic field strength by means of a transformer coil near to the surface of the workpiece,
wherein
a magnitic field which is vertical in relation to the surface of the workpiece produces what is for practical purposes static polarity and the alternating magnetic field is superimposed and high-frequency transmission impulses are released, dependent on half-waves with a single wave-direction which have been striven for, either in the range of only upper or only lower half-waves of the alternating current.

2. Process for testing ferromagnetic workpieces, using ultrasonic waves, in accordance with claim 1 wherein
the magnetic field, with as it were static polarity, which is vertically aligned in relation to the surface of the workpiece, and the alternating magnitic field, is kept variable.

3. Process for testing ferromagnetic workpieces, using ultrasonic waves, in accordance with claims 1 and 2
wherein
the alternating current, in its development in each case from zero throughput and the subsequent maximum amplitude, is divided into two sections of different yet nevertheless in each case constant increase which constantly continue into each other and the high-frequency transmission pulses are released either within the area of the smallest increase or within the area of transition to the smallest increase.

4. Process for testing ferromagnetic workpieces, using ultrasonic waves, in accordance with claims 1 to 3
wherein,
by means of the adaptation of the frequency of the high-frequency transmission pulse to the geometry of the transformer, predominantly transverse waves are generated at specific angles in the workpiece to be tested.

5. Process for testing ferromagnetic workpieces, using ultrasonic waves, in accordance with claims 1 to 3
wherein,
by means of the adjustment of the frequency of the high-frequency transmission pulse to the geometry of the transformer, mainly surface waves are generated in the workpiece to be tested.

6. Testing device with a magnetic system for carrying out the process for testing ferromagnetic workpieces, using ultrasonic waves, in accordance with claim 1, comprising a magnetic bar which generates an alternating magnetic field, by means of alternating electrical current, which is aligned parallel to the surface in the workpiece, and which is provided with a coil, and a transformer coil disposed between the pole shoes of the magnetic bar,
wherein
a magnet (13) which generates a vertical magnetic field is disposed between the pole shoes (12, 12').

7. Testing device with a magnetic system for carrying out the process for testing ferromagnetic workpieces, using ultrasonic waves, in accordance with claim 1, comprising several transformer coils and several magnetic bars which can be connected and which are provided with coils,
wherein
each magnetic bar generates a magnetic field for itself, which is aligned parallel to the surface in the workpiece, by means of alternating current, and the individual magnetic bars (20, 20', 20''...) are disposed star-fashion around a common central bar member (25) and are connected with this central bar forming boundary lines, and at least two of the individual magnetic bars (20, 20'...) are disposed directly adjacent to each other and lie in a plane in each case at an angle of 45° to each other, and a transformer coil (24, 24'...), of a magnet (23, 23'...) which generates a vertical magnetic field, which releases a high-frequency transmission pulse, is disposed in each case between pole shoe (22...) of the magnet bar (20, 20'...) and pole shoe (27) of the central bar member (25), and an additional transformer coil is disposed below the pole shoe (27) of the central bar member (25).

8. Testing device, with a magnetic system, in accordance with any one of or several of the preceding claims
wherein
the transformer coil (14, 24, 24'...) is developed so as to be level and meandering.

9. Testing device, with a magnetic system, in accordance with one or several of the preceding claims
wherein
the additional transformer coil comprises a flat receiver coil (26a) and a flat transmitter coil (26b), which are developed spiral-shaped and are arranged concentrically.

10. Testing device, with a magnetic system, in accordance with claim 6 or 7,
wherein
the respective magnets (13, 23, 23'...) are permanent magnets.

11. Testing device, with a magnetic system, in accordance with claim 6 or 7,
wherein
the respective magnets (13, 23, 23'...) are electromagnets.

12. Testing device, with a magnetic system, in accordance with claims 7 to 9 and one of claims 10 and 11,
wherein
the individual magnetic bars (20, 20'...) are in each case connected by means of joins (28...) such that they are magentically conductive with the common central bar member (25).

13. Testing device, with a magnetic system, in accordance with claim 12,
wherein
the magnetic system comprises four magnetic bars (20, 20'...) in each case with the magnets (23, 23'...) and in each case the transformer coil (24, 24'...).

## Revendications

1. Procédé pour contrôler des pièces à usiner ferromagnétiques au moyen d'ondes ultrasonores, un champ d'aimantation alternatif et parallèle à la surface étant engendré dans la pièce à usiner, par l'intermédiaire d'un système magnétique disposé à la surface de la pièce à usiner et excité par un courant alternatif, et des impulsions d'émission à haute fréquence étant déclenchées, dans la zone de force maximale du champ d'aimantation, par une bobine transductrice agencée près de la surface de la pièce à usiner,
caractérisé en ce qu'un champ magnétique dirigé verticalement à la surface de la pièce à usiner engendre une polarité quasi-statique et est superposé au champ d'aimantation alternatif, et en ce que, en dépendance d'une direction de balayage sonore recherchée, des impulsions d'émission à haute fréquence sont déclenchées, soit uniquement dans la zone des demi-ondes supérieures du courant alternatif, soit uniquement dans la zone des demi-ondes inférieures du courant alternatif.

2. Procédé pour contrôler des pièces à usiner ferromagnétiques au moyen d'ondes ultrasonores selon la revendication 1, caractérisé en ce que le champ magnétique dirigé verticalement à la surface de la pièce à usiner, avec une polarité quasi-statique, et le champ d'aimantation alternatif sont maintenus variables en ce qui concerne leurs forces de champ.

3. Procédé pour contrôler des pièces à usiner ferromagnétiques au moyen d'ondes ultrasonores selon les revendications 1 et 2,
caractérisé en ce que la courbe du courant alternatif est divisée, à chaque fois, entre le passage par zéro et le maximum d'amplitude suivant, en au moins deux zones partielles, de transition continue, de pentes différentes mais à chaque fois constantes, et en ce que les impulsions d'émission à haute fréquence sont déclenchées, soit dans la zone de la plus petite pente, soit dans la zone de transition vers la plus petite pente.

4. Procédé pour contrôler des pièces à usiner ferromagnétiques au moyen d'ondes ultrasononores selon les revendications 1 à 3,
caractérisé en ce que, par l'adaptation de la fréquence de l'impulsion d'émission à haute fréquence à la géométrie du transducteur, des ondes généralement transversales sous des angles prédéterminés sont engendrées dans la pièce à usiner devant être contrôlée.

5. Procédé pour contrôler des pièces à usiner ferromagnétiques au moyen d'ondes ultrasonores selon les revendications 1 à 3,
caractérisé en ce que, par l'adaptation de la fréquence de l'impulsion d'émission à haute fréquence à la géométrie du transducteur, des ondes généralement superficielles sont engendrées dans la pièce à usiner devant être contrôlée.

6. Dispositif de contrôle comportant un système magnétique, pour la mise en oeuvre du procédé pour contrôler des pièces à usiner ferromagnétiques au moyen d'ondes ultrasonores selon la revendication 1, constitué d'une culasse d'aimant munie d'une bobine, culasse qui engendre, au moyen d'un courant alternatif, un champ d'aimantation alternatif dirigé parallèlement à la surface, dans la pièce à usiner, et d'une bobine transductrice agencée entre les pièces polaires de la culasse d'aimant,
caractérisé en ce qu'entre les pièces polaires (12,12'), est agencé un aimant (13) engendrant un champ magnétique vertical.

7. Dispositif de contrôle comportant un système magnétique, pour la mise en oeuvre du procédé pour contrôler des pièces à usiner ferromagnétiques au moyen d'ondes ultrasonores selon la revendication 1, constitué d'une pluralité de bobines transductrices et d'une pluralité de culasses d'aimant pouvant être reliées ensemble et munies de bobines, caractérisé en ce que chaque culasse d'aimant engendre, au moyen d'un courant alternatif, un champ d'aimantation alternatif dirigé parallèlement à la surface, dans la pièce à usiner, en ce que les culasses d'aimant individuelles (20, 20', 20'', ...) sont agencées, en forme d'étoile, autour d'une pièce de culasse (25) centrale commune et sont reliées à celle-ci en formant des lignes de séparation droites, en ce qu'au moins deux des culasses d'aimant individuelles (20, 20', ...), directement adjacentes et se trouvant dans un plan, sont agencées en étant à chaque fois décalées l'une par rapport à l'autre d'un angle de 45 degrés, en ce qu'à chaque fois, entre une pièce polaire (22, ...) de la culasse d'aimant (20, 20', ...) et une pièce polaire (27) de la pièce de culasse centrale (25), sont agencés un aimant (23, 23', ...) engendrant un champ magnétique vertical et une bobine transductrice (24, 24', ...) déclenchant des impulsions d'émission à haute fréquence, et en ce qu'une bobine transductrice supplémentaire (26) est agencée sous la pièce polaire (27) de la pièce de culasse centrale (25).

8. Dispositif de contrôle comportant un système magnétique selon l'une ou plusieurs des revendications précédentes, caractérisé en ce que la bobine transductrice (14, 24, 24', ...) est réalisée de façon plane et en forme de méandre.

9. Dispositif de contrôle comportant un système magnétique selon l'une ou plusieurs des revendications précédentes, caractérisé en ce que la bobine transductrice supplémentaire est constituée d'une bobine réceptrice plane (26a) et d'une bobine émettrice plane (26b), qui sont réalisées en forme de spirale et sont agencées de façon concentrique.

10. Dispositif de contrôle comportant un système magnétique selon l'une des revendications 6 ou 7,
caractérisé en ce que les aimants (13, 23, 23', ...), ou l'aimant, sont des aimants permanents.

11. Dispositif de contrôle comportant un système magnétique selon l'une des revendications 6 ou 7,
caractérisé en ce que les aimants (13, 23, 23', ...), ou l'aimant, sont des électroaimants.

12. Dispositif de contrôle comportant un système magnétique selon les revendications 7-9 et une des revendications 10 ou 11,
caractérisé en ce que les culasses magnétiques individuelles (20, 20', ...) sont reliées, à chaque fois, à la pièce de culasse (25) centrale commune, de façon magnétiquement conductrice, par l'intermédiaire de charnières (28).

13. Dispositif de contrôle comportant un système magnétique selon la revendication 12,
caractérisé en ce que le système magnétique est constitué de quatre culasses d'aimant (20, 20', ...) comportant, à chaque fois, l'aimant correspondant (23, 23', ...) et la bobine transductrice correspondante (24, 24', ...).
